(19) Europäisches Patentamt
European Patent Office
Office européen des brevets

(11) **EP 1 839 950 A2**

(12) **EUROPEAN PATENT APPLICATION**

(43) Date of publication:
**03.10.2007 Bulletin 2007/40**

(51) Int Cl.:
***B60R 11/00*** *(2006.01)*

(21) Application number: **07004144.7**

(22) Date of filing: **28.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.03.2006 JP 2006087332**

(71) Applicant: **Xanavi Informatics Corporation Zama-shi,
Kanagawa 228-0012 (JP)**

(72) Inventors:
• **Nakahara, Takashi,
Hitachi Ltd.
Chiyoda-ku
Tokyo 100-8220 (JP)**

• **Matsuo, Shigeru,
Hitachi Ltd.
Chiyoda-ku
Tokyo 100-8220 (JP)**
• **Atarashi, Yoshitaka,
Hitachi Ltd.
Chiyoda-ku
Tokyo 100-8220 (JP)**
• **Miyazawa, Hirohisa
Zama-shi
Kanagawa 228-0012 (JP)**
• **Yoshimaru, Takashi,
Hitachi Ltd.
Chiyoda-ku
Tokyo 100-8220 (JP)**

(74) Representative: **Beetz & Partner
Steinsdorfstrasse 10
D-80538 München (DE)**

(54) **On-vehicle stereoscopic display device**

(57) The invention relates to an on-vehicle stereoscopic display device 10 wherein the same graphics having different brightness levels are superimposed on display devices 121, 122 to represent the depth of a graphic. The device has a configuration such that information indicating a cross-sectional shape of a graphic to be stereoscopically displayed is generated, and based on the generated information indicating the cross-sectional shape, the graphic having the depth is transparently displayed from the front to the rear of the screen. It is, therefore, possible to provide the on-vehicle stereoscopic display device 10 wherein levels of the depth of a graphic to be stereoscopically displayed do not depend on the number of display devices, there are fewer limitations over a position of an operator to watch the display, and the superior visibility is provided.

FIG.1

EP 1 839 950 A2

**Description**

CROSS-REFERENCE TO RELATED APPLICATION(S)

This application claims the foreign priority benefit under Title 35, United States Code, §119 (a)-(d), of Japanese Patent Application No. 2006-087332, filed on March 28, 2006 in the Japan Patent Office, the disclosure of which is herein incorporated by reference in its entirety.

BACKGROUND OF THE INVENTION

1. Field of the Invention

The present invention relates to an on-vehicle stereoscopic display device having a stereoscopic display function such as a display, a multifunction display, an icon display, a speedometer, or the like in a car navigation system.

2. Description of the Related Art

As disclosed in, for example, Japanese Laid-open Patent Application No. 2004-359051 (paragraph [0007] ~ [0008], Fig. 3), a plurality of display devices are provided in a stereoscopic display device, and the display devices except the display device located at the very rear position have a function to transparently display an image through the back side. Different graphics are drawn in the each display device, thereby realizing a stereovision. By using such a function, a graphic or a character including an icon, a route on a map, a place-name, or the like are highlighted and emphatically displayed on a display, thereby improving the visibility.

There have been known stereoscopic (three-dimensional) display devices as disclosed in "Deflection-type DFD display device, NTT IT Corporation", [online] [searched on December, 5, 2005], the internet URL <http://www.ntt-it.co.jp/goods/idp/dfd/principle.html>, and Japanese Laid-open Patent Application No. 2005-189426 (paragraph [0005], [0010] ~[0013], Fig. 1). Two display devices are provided in such a display device, and the display device located at the front has a function to transparently display an image through the back side. The same graphics or characters having different brightness levels are drawn in the each display device, and the display devices are superimposed on one another, thereby providing an appearance of depth.

However, according to the system disclosed in Japanese Laid-open Patent Application No. 2004-359051, levels of the depth depends on the number of the display devices to be used, and therefore it is impossible to provide a stereoscopic display device having a high visibility depending on the number of the display devices to be used.

According to the systems disclosed in "Deflection-type DFD display device, NTT IT Corporation", and Japanese Laid-open Patent Application No. 2005-189426, there are many limitations over a space between the superimposed display surfaces and a position of an operator to watch the display. Specifically, when a driver sitting on a driver's seat watches an icon or a route, which is highlighted and emphatically displayed on a display, in an oblique direction, there may be a problem of parallax errors, such that the graphic is seen as double.

SUMMARY OF THE INVENTION

The present invention is accomplished to solve the above-mentioned problems. An object of the present invention is to provide an on-vehicle stereoscopic display device that is capable of reducing limitations over a position for an operator to watch a display and is superior in the visibility.

According to one aspect of the present invention, there is provided an on-vehicle stereoscopic display device wherein the same graphics having different brightness levels may be superimposed on at least two display devices to represent the depth of a graphic. The device may further have a configuration such that information indicating a cross-sectional shape of a graphic to be stereoscopically displayed, such as a background, a road, and/or a route, is generated, and based on the generated information indicating the cross-sectional shape, the graphic having the depth may be transparently displayed from the front to the rear of the screen.

According to the present invention, it is possible to provide an on-vehicle stereoscopic display device that is capable of reducing limitations over a position for an operator to watch a display and is superior in the visibility.

The above features can be combined in any way partly or as a whole.

BRIEF DESCRIPTION OF THE DRAWINGS

The object and features of the present invention will become more readily apparent from the following detailed description taken in conjunction with the accompanying drawings in which:

Fig. 1 is a block diagram of an internal configuration of an on-vehicle stereoscopic display device according to an embodiment of the present invention;

Fig. 2 shows an example of a data structure of a navigation setting information DB;

Fig. 3 is a schematic operation diagram wherein a drawing operation performed by a graphics processor unit shown in Fig. 1 is schematically illustrated on screens;

Fig. 4 is a flowchart for explaining a basic operation of an on-vehicle stereoscopic display device according to an embodiment of the present invention;

Figs. 5A and 5B illustrate examples of road drawing information and route drawing information, respectively, in table form according to the first embodiment

Fig. 6 is a flowchart for explaining an operation of the on-vehicle stereoscopic display device according to the first embodiment;

Fig. 7 is a flowchart for explaining an operation of the on-vehicle stereoscopic display device according to the first embodiment;

Fig. 8 illustrates an example of a configuration of a screen of the on-vehicle stereoscopic display device according to the first embodiment;

Figs. 9A to 9C illustrate schematic operation diagrams for explaining an operation of the on-vehicle stereoscopic display device according to the first embodiment;

Figs. 10A to 10E illustrate schematic operation diagrams for explaining an operation of the on-vehicle stereoscopic display device according to the first embodiment;

Figs. 11A and 11B illustrate examples of road drawing information and route drawing information, respectively, in table form;

Fig. 12 is a flowchart for explaining an operation of the on-vehicle stereoscopic display device according to the second embodiment;

Fig. 13 is a flowchart for explaining an operation of the on-vehicle stereoscopic display device according to the second embodiment;

Figs. 14A and 14B illustrate schematic operation diagrams for explaining an operation of the on-vehicle stereoscopic display device according to the second embodiment;

Figs. 15A and 15B illustrate schematic operation diagrams for explaining an operation of the on-vehicle stereoscopic display device according to the second embodiment;

Fig. 16 illustrates a schematic operation diagram for explaining an operation of the on-vehicle stereoscopic display device according to the second embodiment;

Fig. 17 illustrates a schematic operation diagram for explaining an operation of the on-vehicle stereoscopic display device according to the second embodiment;

Figs. 18A and 18B illustrate schematic operation diagrams for explaining an operation of the on-vehicle stereoscopic display device according to the second embodiment;

Figs. 19A and 19B illustrate schematic operation diagrams for explaining an operation of the on-vehicle stereoscopic display device according to the second embodiment; and

Figs. 20A and 20B illustrate schematic operation diagrams for explaining an operation of the on-vehicle stereoscopic display device according to the second embodiment.

DETAILED DESCRIPTION OF THE INVENTION

Hereinafter, an embodiment of the present invention will be described in detail with reference to the attached drawings.

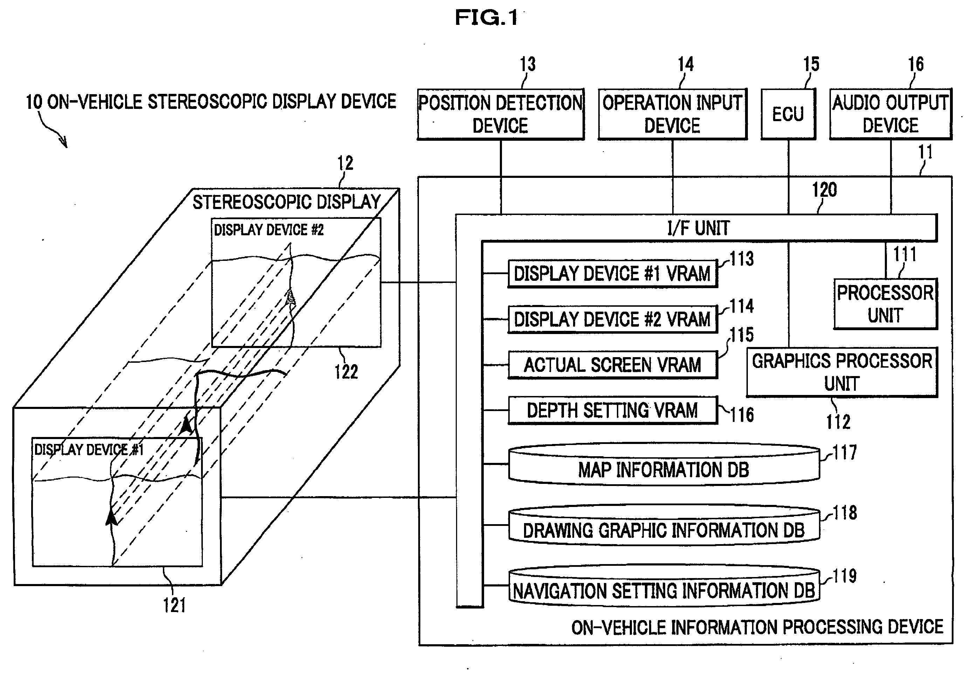

Fig. 1 is a block diagram of an internal configuration of an on-vehicle stereoscopic display device according to an embodiment of the present invention. Fig. 1 shows the embodiment wherein the on-vehicle stereoscopic display device according to the present invention is employed in a car navigation system.

An on-vehicle stereoscopic display device 10 according to the embodiment of the present invention includes an on-vehicle information processing device 11, which is a control center of a car navigation system, and its peripherals including a stereoscopic display 12, a position detection device 13, an operation input device 14, an electric control unit (hereinafter referred to as ECU) 15, and an audio output device 16.

The on-vehicle information processing device 11 receives input information, which is output from each of the position detection device 13, the operation input device 14, and the ECU 15, and processes the input information based on internally determined information. Then, the on-vehicle information processing device 11 displays the generated information on the stereoscopic display 12 (a display device #1, a display device #2), and outputs guidance such as route guidance through the audio output device 16 by voice.

As shown in Fig. 1, the on-vehicle information processing device 11 includes a processor unit 111, a graphics processor unit 112, a display device #1 VRAM 113, a display device #2 VRAM 114, an actual screen VRAM 115, a depth setting VRAM 116, a map information DB 117, a drawing graphic information DB 118, a navigation setting information DB 119, and an interface (I/F) unit 120.

The processor unit 111 generates information indicating a cross-sectional shape of a graphic to be stereoscopically displayed based on a display specification, and based on the generated information, the processor unit 111 controls the graphics processor unit 112 that processes information received through the I/F unit 120. The "display specification" includes information indicating a position, a color, and a shape of a graphic to be displayed on a screen in order to represent the depth of a graphic to be stereoscopically displayed. The graphic includes a road, a route, or an icon. The display specification will be described later.

Based on the information, which is generated by the processor unit 111 and indicates a cross-sectional shape of a graphic, the graphics processor unit 112 transparently displays a graphic from the front position toward the rear position of the screen so as to display the depth of the graphic. Specifically, the graphics processor unit 112 reads from and writes to the actual screen VRAM 115 and the depth setting VRAM 116, or performs conversion to reflect contents, which are written in the actual screen VRAM 115 and the depth setting VRAM 116, in the display device #1 VRAM 113 and the display device #2 VRAM 114.

The "graphic" includes a line to draw a road, a graphic to draw an icon, a character string to draw a name, a graphic to draw a background, or the like.

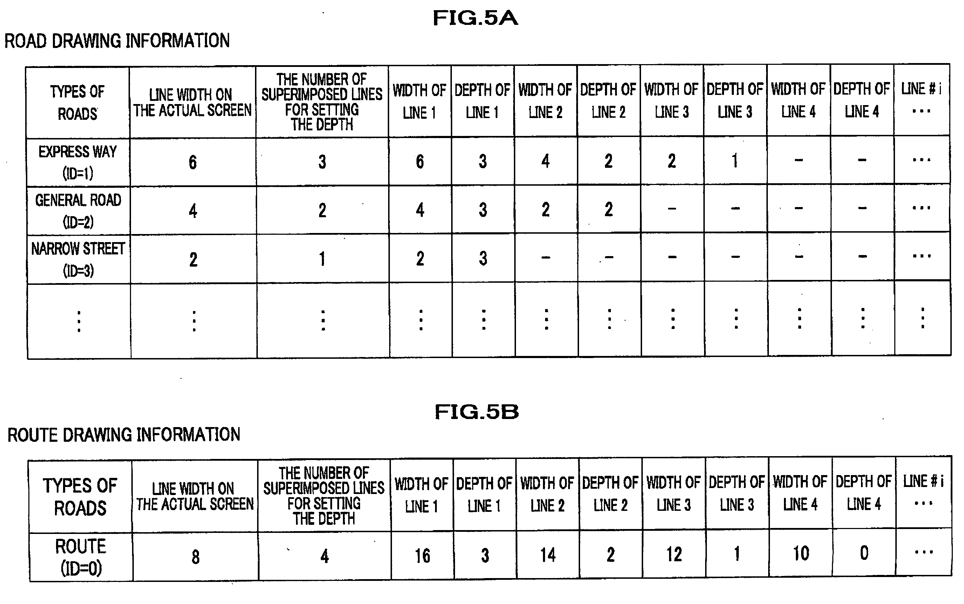

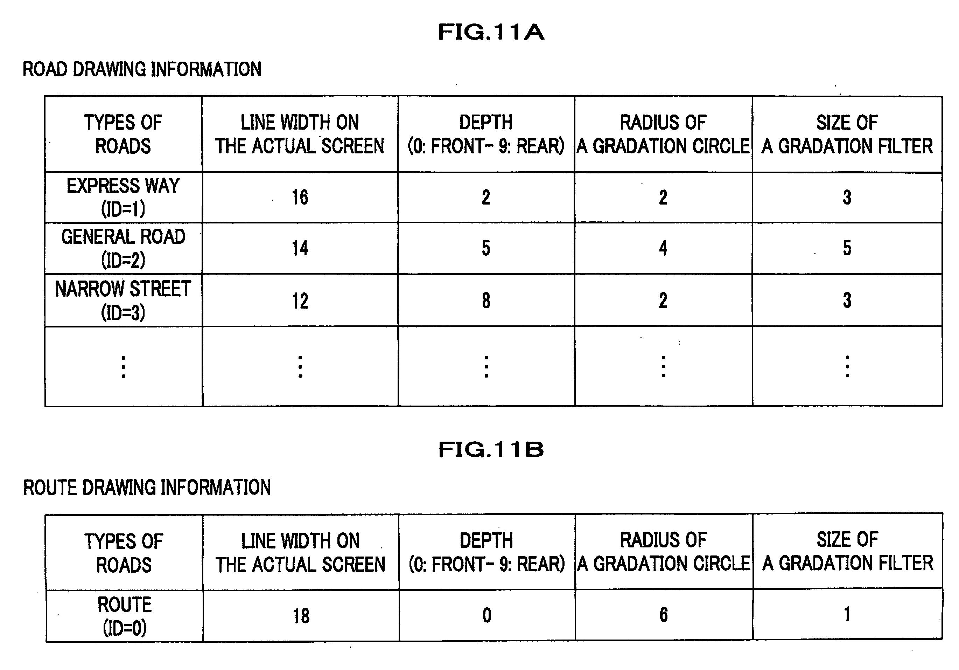

The "information indicating a cross-sectional shape of a graphic" includes drawing information with regard to a graphic, the information determined in the navigation setting information DB 119, which will be described later. For example, road drawing information includes information with regard to a line width on an actual screen, the number of superimposed lines for setting the depth, the width and depth (a distance from the front to the rear positions of the screen is indicated by a numeric number) of each of superimposed lines, which will be described later in the first embodiment (Fig. 5A). The line width on an actual screen, the number of superimposed lines, the width and depth of a line are defined for each type of roads. The road drawing information also includes information with regard to a line width on an actual screen, the depth of a line, the radius of a gradation circle, and the size of a gradation filter, as shown in the later-described second embodiment in Fig. 11 A. A line width on an actual screen, the depth of a line, the radius of a gradation circle, and the size of a gradation filter are defined for each type of roads. The detail description will be given later.

The display device #1 VRAM 113 and the display device #2 VRAM 114 are display device screen storage units to temporarily store contents to be displayed on the display devices 121, 122, which constitute the stereoscopic display 12. The actual screen VRAM 115 is a screen storage unit for an actual screen to temporarily store a two-dimensional display content, for which the depth is to be provided. The depth setting VRAM 116 is a screen storage unit for setting the depth to temporarily store information with regard to the depth corresponding to each pixel in the actual screen VRAM 115.

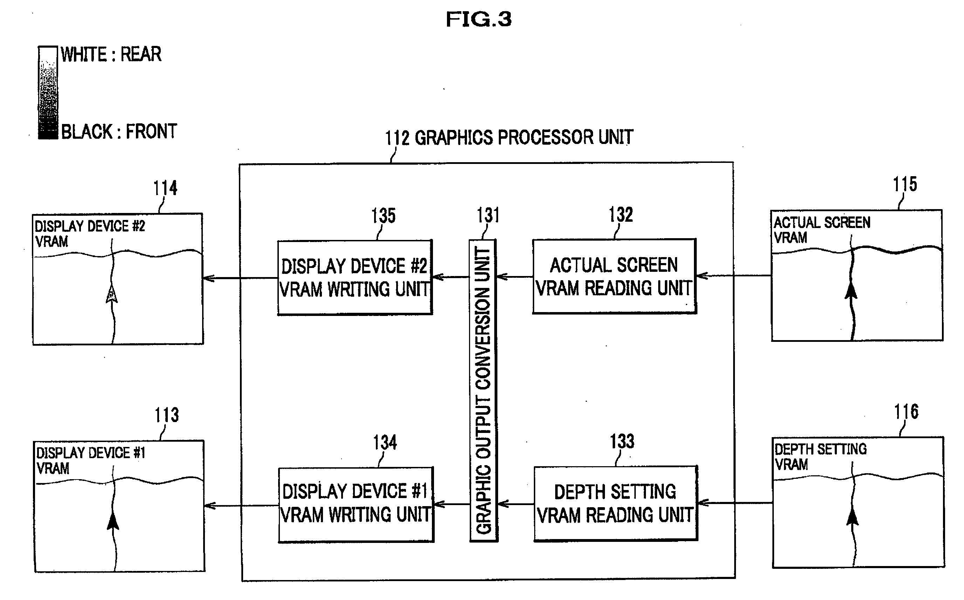

The graphics processor unit 112 converts information generated by the processor unit 111, and writes the information in the display device #1 VRAM 113 and the display device #2 VRAM 114. The detail description will be given later with reference to Fig. 3.

The map information DB 117 is a database that stores map information required for map display and route guidance. The map information includes information with regard to a position or a type of a road, facilities, a background, or the like. The drawing graphic information DB 118 is a database that stores map information to be used in facility information, an icon, a template of a menu screen, or the like.

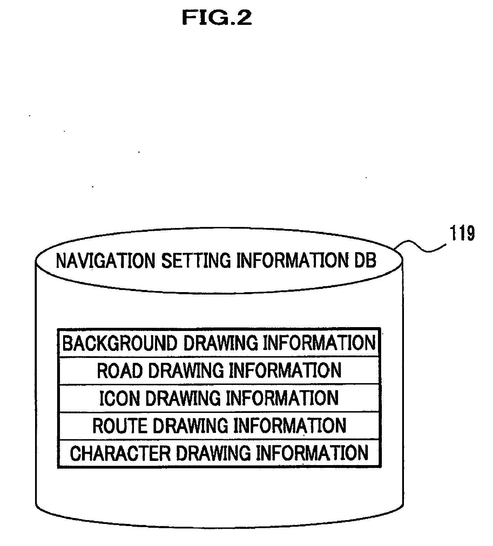

The navigation setting information DB 119 includes information (parameter with respect to a shape, color, depth, or the like) indicating a cross-sectional shape of a graphic to be displayed stereoscopically, such as a background, a road, an icon, a route, or the like, which are respectively stored in the navigation setting information DB 119 as background drawing information, road drawing information, icon drawing information, route drawing information, and character drawing information. Fig. 2 shows an example of a data structure of the above-mentioned navigation setting information DB.

The I/F unit 120 mediates information exchange between the externally connected devices 12, 13, 14, 15, 16 and the on-vehicle information processing device 11.

The stereoscopic display 12 has a three-dimensional display function and displays information generated by the on-vehicle information processing device 11.

The stereoscopic display 12 includes two display devices (the display device #1 (121), the display device #2 (122)), each of which is composed of, for example, a liquid crystal device (LCD) and is capable of displaying information from the on-vehicle information processing device 11 alone. The two display devices are respectively located at the front and the rear positions in relation to a driver's seat. The display device (the display device #1 (121)) located at the front can transparently display an image through the back side from the front position toward the rear position.

The position detection device 13, which is peripheral, is required to detect a position of a vehicle, and includes a Global Positioning System (GPS), an ECU used as a meter, an acceleration sensor, or the like. The operation input device 14 receives an operation input from a user and transmits the input operation to the on-vehicle information processing device 11. The operation input device 14 includes a remote control, a console panel, a microphone for voice recognition, or the like. The display device #1(121) may be replaced by a touch panel to be used as the operation input device 14.

The ECU 15 is an electric control device of a vehicle, and is disposed in an appropriate place in a vehicle. For example, the ECU 15 receives a signal from a sensor or the like via an in-vehicle Local Area Network (LAN) and outputs the signal to the on-vehicle information processing device 11, or performs a command generated by the on-vehicle information processing device 11. The audio output device 16 converts information generated by the on-vehicle information processing device 11 into a voice, and outputs the voice. The audio output device 16 includes a speaker, a headphone, or the like.

Fig. 3 is a schematic operation diagram wherein the graphics processor unit 112 and its periphery are shown, and a drawing operation performed by the graphics processor unit 112 is schematically illustrated on screens.

As shown in Fig. 3, the graphics processor unit 112 includes a graphic output conversion unit 131 as its control center, an actual screen VRAM reading unit 132, a depth setting VRAM reading unit 133, a display device #1 VRAM writing unit 134, and a display device #2 VRAM writing unit 135.

The graphic output conversion unit 131 reads and copies graphic information stored in the actual screen VRAM 115 through the actual screen VRAM reading unit 132, reads depth setting information from the depth setting VRAM 116 through the depth setting VRAM reading unit 133, and based on the depth setting information, the graphic output conversion unit 131 converts a brightness of the graphic information. Then, the graphic output conversion unit 13 draws the same graphic, which is copied and have the converted brightness, in the display device #1 VRAM 113 and the display device #2 VRAM 114, respectively, through the display device #1 VRAM writing unit 134 and the display device #2 VRAM writing unit 135.

Specifically, when a vehicle position, a route, or a road is drawn, the depth setting VRAM 116 is firstly set to display the vehicle position as seen located at the front, the route as seen located in the middle, and the road as seen located at the rear. In the depth setting VRAM 116, in fact, a graphic is drawn in grayscale, that is, in black at the front, in gray in the middle, and in white at the rear. In this case, the vehicle position is drawn in black, the route in gray, and the road in white.

When an object such as the above-mentioned vehicle position, route, or road is stereoscopically displayed, the brightness of the object is high in the display device #1 (121) and the brightness of the object is low in the display device #2 (122), so that the object is displayed at the front in the whole stereoscopic display 12. On the contrary, the brightness of the object is low in the display device #1 (121) and the brightness of the object is high in the display device #2 (122), so that the object is displayed at the rear in the stereoscopic display 12.

Therefore, the graphic output conversion unit 131 copies a content of the actual screen VRAM 115 into the display device #1 VRAM 113 and the display device #2 VRAM 114, and then converts the brightness of an object by referring to a content in the depth setting VRAM 116. The brightness to be displayed at the front, that is, a vehicle position is high in the display device #1 (121) and is low in the display device #2 (122).

The brightness of an object to be displayed at the rear, that is, a road is low in the display device #1 (121) and is high in the display device #2 (122). Further, the brightness of an object to be displayed in the middle, that is, a route is equal in the display device #1 (121) and the display device #2 (122).

The brightness of an object to be displayed on the very front is zero in the display device #2 (122) and nothing is displayed at the rear, and therefore a shadow graphic is displayed at the rear to heighten a three-dimensional appearance of the object.

A detail description will be given on the brightness conversion performed by the graphic output conversion unit 131 by using vectors. The number of pixels constituting a display screen is defined as 1 (dot) * m (dot), and a content of a pixel (i, j) in the actual screen VRAM 115 is defined as a (i, j). The content a (i, j) includes a vector data representing a color of the pixel, such as RGB data. For example, a pixel in the actual screen VRAM 115 is defined as white, that is, a (i, j) = (R, G, B), and each color is assumed to be in the range from 0 to 255. Then it is determined that a (i, j) = (255, 255, 255), where R=255, G=255, B=255.

A content of a pixel (i, j) in the display device #1 VRAM 113 is defined as b (i, j), a content of a pixel (i, j) in the display device #2 VRAM 114 as c (i, j), a content of a pixel (i, j) in the depth setting VRAM 116 as d (i, j), and a vector (255, 255, 255) as v255. Thereby, the graphic output conversion unit 131 outputs b (i, j), c(i, j) determined by the following equations.

$$b\ (i,\ j) = (v255 - a\ (i,\ j))\ /255*d\ (i,\ j) + a\ (i,\ j)$$

$$c\ (i,\ j) = -\ (v255 - a\ (i,\ j))\ /255*d\ (i,\ j) + v255$$

A transmission color is assumed to be white. When the content d (i, j) indicates the front position, a color of the content a (i, j) is displayed on the display device #1 (121) located at the front, and a transmission color is displayed on the display device #2 (122) located at the rear, so that the pixel is seen located at the front. On the other hand, when the content d (i, j) indicates the rear position, a transmission color is displayed on the display device #1 (121) located at the front, and a color of the content a (i, j) is displayed on the display device #2 (122) located at the rear, so that the pixel is seen located at the rear.

A depth resolution (from the front to the rear) and the number of display devices (#1, #2) do not have to be identical.

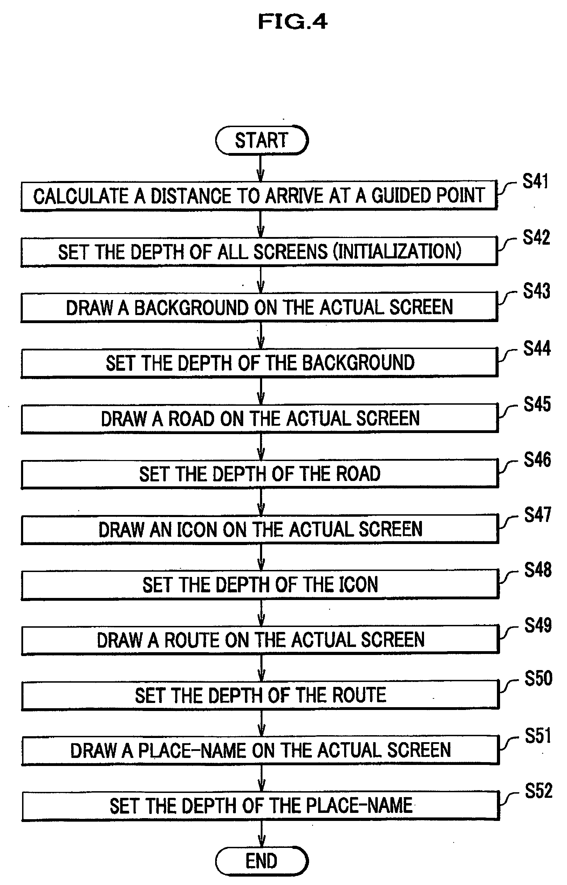

Fig. 4 is a flowchart for explaining a basic operation of the on-vehicle stereoscopic display device according to an embodiment of the present invention. The flowchart in Fig. 4 also illustrates an operating procedure of a program according to the present invention.

With reference to the flowchart in Fig. 4, a description will be given on a basic operation of the on-vehicle stereoscopic display device according to the embodiment of the present invention shown in Figs. 1 to 3.

The processor unit 111 calculates a distance to arrive at a guided point based on current position information measured by the position detection device 13 and destination information input by a user though the operation input device 14 (step S41).

Next, the processor unit 111 reads various drawing information with regard to a background, a road, an icon, a route, a character, or the like from the drawing graphic information DB 118. If necessary, the processor unit 111 reads a vehicle position from the position detection device 13, vehicle information such as a vehicle speed from the ECU 15, or map information or the like from the map information DB 117, and processes the each read information in such a format that the information can be displayed on a map screen, a route guidance screen, a menu screen, or the like.

Then, the processor unit 111 performs a depth setting of all screens including a map screen, a route guidance screen, a menu screen, or the like in order to stereoscopically display an object (step S42). The processor unit 111 performs initialization to set depths of all screens to the rear position of the screen.

Then, the graphics processor unit 112 writes in the depth setting VRAM 116. Specifically, the graphics processor unit 112 alternately performs an actual screen drawing process (the process to write in the actual screen VRAM 115) and a depth setting process (the process to write in the depth setting VRAM 116) in a predefined order of priority, for example, the order of a background, a road, an icon, a route, and a place-name (step S43 to step S52). The graphics processor unit 112 performs the above processes by reading drawing information of a graphic to be stereoscopically displayed from the navigation setting information DB 119, or based on drawing information sequentially generated by function calculation.

Hereinafter, a detail description will be given on the above-mentioned depth setting process with reference to the drawing information shown in Figs. 5 and 11 as the first and second embodiments of the present invention. In both embodiments, a graphic is stereoscopically displayed by using the two display devices (#1 and #2).

(First embodiment)

Fig. 5A illustrates an example of road drawing information stored in the navigation setting information DB 119 in table form. The road drawing information is generated by the processor unit 111. The road drawing information shows a cross-sectional shape of a road including a line width on an actual screen, the number of superimposed lines for setting the depth, a line width of each of the superimposed lines, and the depth of the line. The road drawing information is provided for each type of roads, to which an ID is attached, such as an express way or a general road. The road drawing information is stored in the navigation setting information DB 119. The shape of a road is represented by a line width.

The graphics processor unit 112 refers to the road drawing information stored in the navigation setting information DB 119, and repeatedly performs the drawing as many times as the number of superimposed lines to draw lines 1 to 4 according to the depths of the lines 1 to 4, thereby drawing a road having a sloped side. A detail description will be given later.

Fig. 5B illustrates an example of route drawing information stored in the navigation setting information DB 119 in table form. The route drawing information is drawing information with regard to a route, and includes one type of roads (ID = 0), which is different form the road drawing information.

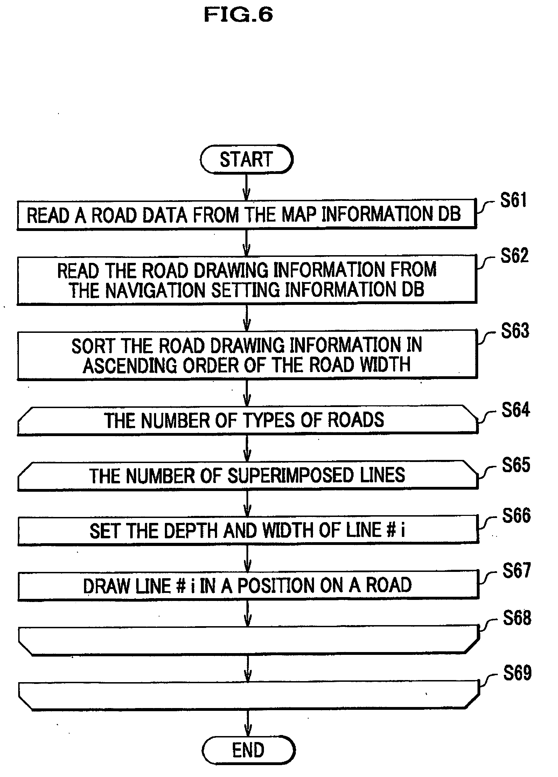

Fig. 6 is a flowchart for explaining an operation of the on-vehicle stereoscopic display device according to the first embodiment. Fig. 6 shows a flow of a process for setting depth of a road, and also shows an operating procedure of a program according to the present invention.

Hereinafter, a description will be given on an operation for setting depth of a road according to the first embodiment with reference to the flowchart in Fig. 6.

The processor unit 111 reads a road data from the map information DB 117 (step S61), and reads the road drawing information from the navigation setting information DB 119 (step S62). Next, the processor unit 111 sorts the read road drawing information of all roads in the ascending order of the road width (step S63).

The processor unit 111 sets information with regard to the depth and width of a line # i (1~n), which is shown in Fig. 5A, as the road drawing information (step S66), and draws the line # i in a position on a road (step S67). The setting process and the drawing process in steps S66, S67 are repeatedly performed as many times as the number of types of roads (steps S64 to S69) and the number of superimposed lines (steps S65 to S68). Thereby, a road to be displayed is provided with a slope and the slope can reduce parallax errors.

The setting process means generating information (information with regard to the depth and width of the line #1) indicating a cross-sectional shape of a road. The setting process includes storing a content predefined according to a display specification in the navigation setting information DB 119 as the road drawing information, or outputting the required road drawing information by inputting maximum and minimum values of the depth, the width of a line, or a linear degree (for example, 0: linear, 1: stepwise) as a parameter in a predetermined function.

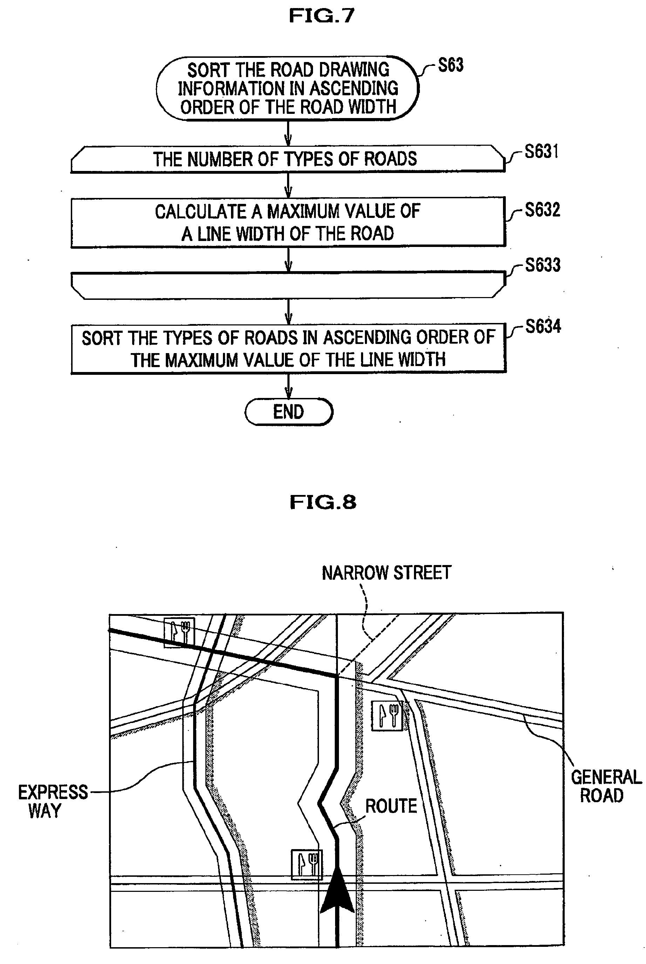

Fig. 7 shows the details of the sort process in step S63. Specifically, the processor unit 111 loops as many times as the number of types of roads (ID = 1~3) (steps S631 to S633), and determines a maximum value of a line width of a road (step S632). The processor unit 111 sorts the types of roads in the ascending order of the maximum value of the line width (step S634). Thereby, the graphics processor unit 112 can draw a thin line at the front of the screen and a thick line at the rear, thereby displaying a road having a sloped side.

The graphics processor unit 112 write a corresponding line in the depth setting VRAM 116 according to the road drawing information (the depth and width of the line), which is stored in the navigation setting information DB 119 or is output by the function calculation.

Although the depth setting process is performed with the road in the above description, the depth setting process is performed with a route, which is displayed based on the route drawing information shown in Fig. 5B, a background, or an icon in the same manner.

Fig. 8 illustrates an example of a configuration of a screen generated by the on-vehicle stereoscopic display device according to the first embodiment.

A cross-sectional shape of a graphic or a character to be displayed will be explained. When a graphic or a character is displayed as seen located in the middle position between the front and the rear positions, an inner portion of the graphic, which excludes an outline portion of the graphic, is displayed as seen located in the middle position and the outline portion of the graphic is displayed as seen located from the middle position to the rear position and extends from the inner portion toward the outside.

In order to display the outline portion, a gradation circle is used to draw the outline portion on an edge of a graphic or a character, or a white and thick line is drawn and then a colored line with the deep color and the narrow width is written thereon. In any way, the outline portion is drawn to be displayed as seen located from the middle position to the rear position.

A maximum line width, line depth, and the number of lines to be superimposed are determined according to the type of roads, or points of interest (POI). The object, which is required to be emphatically displayed, is set to be displayed in a thicker line.

When the center of the line is located at neither the front nor the very rear position and is located in the middle position, the line is drawn such that the line extends from the inner ward toward the outside and the depth extends from the middle position to the innermost position.

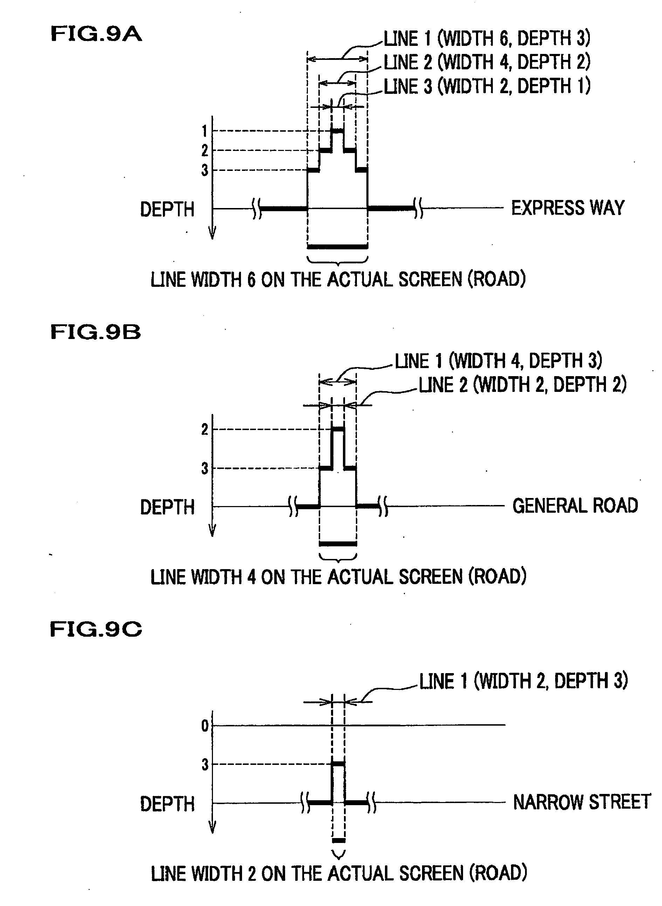

As shown in Fig. 8, the roads are grouped into an express way, a general road, and a narrow street, and are displayed two-dimensionally according to the cross-sectional shapes shown in Fig. 9A to 9C. The depth setting process is carried out in the predetermined order of priority to display, from the rear position of the screen, a background, a road, an icon, a route, and a place-name, as mentioned above.

Figs. 9A to 9C illustrate the cross-sectional shape of each of a route, an express way, a general road, and a narrow street, and the cross-sectional shapes of the roads are drawn according to the road drawing information shown in Fig. 5A. Figs. 9A to 9C show the depth, which is a distance from the front of the screen, represented by a numeric number in the vertical axis, and a position in the horizontal axis.

Fig. 9A illustrates a cross-sectional shape of the express way to be displayed by the line width 6 on the actual screen, as shown in Fig. 5A as the road drawing information. Fig. 9A shows a cross-section where the line 1 having the width 6 and the depth 3, the line 2 having the width 4 and the depth 2, and the line 3 having the width 2 and the depth 1 are superimposed. Fig. 9B illustrates a cross-sectional shape of the general road to be displayed by the line width 4 on the actual screen. Fig. 9B shows a cross-section where the line 1 having the width 4 and the depth 3 and the line 2 having the width 2 and the depth 2 are superimposed. Fig. 9C illustrates a cross-sectional shape of the narrow street to be displayed by the line width 2 on the actual screen. Fig. 9C shows a cross-section where only the line 1 having the width 2 and the depth 3 is drawn (the number of superimposed lines is 1).

The above-mentioned drawing of the cross-sectional shape is carried out by repeatedly performing the process to "set the depth and width of the line # i" as shown in step S66 in Fig. 6, and the process to "draw the line # i in a position on a road" as shown in step S67 as many times as the number of superimposed lines.

In the present embodiment, the depth to display an outline portion is changed depending on the depth value of an object. When the depth of an object indicates the middle position, usually the objects having the same size are displayed on front and rear crystals. Therefore, the graphic is seen as double when a line of vision slides off the front position of a device. However, the outline portion is drawn in the graphic located at the rear, and therefore the graphic located at the front is covered by the graphic located at the rear at the outline portion. Thereby, even when a line of vision slides in some degree, a gap between the images of the object is unnoticeable. Furthermore, the outline portion is provided with a gradation color to gradate the inner ward of the image at the front, thereby erasing the line of the inner ward.

As shown in Figs. 9A to 9C, the sloped side of the road, which is displayed based on the cross-sectional shape of the road, can reduce parallax errors. As a result, when a driver on a driver's seat watches the road, which is highlighted and empathically displayed on a display, in an oblique direction, it is possible to prevent a problem of parallax errors such that the graphic is seen as double.

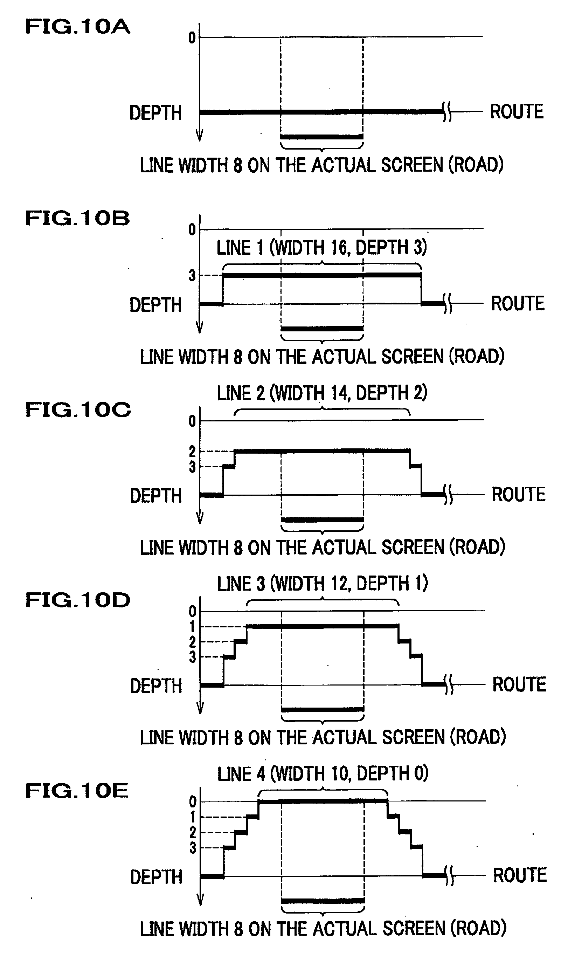

Figs. 10A to 10E illustrate cross-sectional shapes of the route, which are drawn according to the route drawing information as shown in Fig. 5B.

Fig. 10A illustrates a cross-section of the route that is displayed by the line width 8 on the actual screen and is not displayed three-dimensionally. Fig. 10B illustrates a cross-section of the route, wherein the line 1 having the width 16 and the depth 3 is drawn on the route in Fig. 10A. Fig. 10C illustrates a cross-section of the route to be displayed by the line width 8 on the actual screen, wherein the line 2 having the width 14 and the depth 2 is superimposed on the line 1 in Fig. 10B. Fig. 10D illustrates a cross-section of the route, wherein the line 3 having the width 12 and the depth 1 is superimposed on the lines 1, 2 in Fig. 10C. Fig. 10E illustrates a cross-section of the route, wherein the line 4 having the width 10 and the depth 0 is superimposed on the lines 1, 2, 3 in Fig. 10D. That is, the cross-section of the route shown in Fig. 10E shows the route, which is drawn by "the number of superimposed lines 4 for setting depth" as shown in Fig. 5B, and is provided with a sloped side. When the lines are superimposed, the part where the lines are superimposed are overwritten and are not displayed as an image.

In order to draw a cross-section of a route as mentioned above, the process to "set depth and width of the line # i" as shown in step S66 in Fig. 6 and the process to "draw the line # i in a position on a road" as shown in step S67 in Fig. 6 are repeatedly performed as many times as the number of superimposed lines.

As shown in Fig. 10E, the sloped sides of the route, which is displayed based on the cross-section of the route, can reduce parallax errors. Thereby, when a driver on a driver's seat watches the route, which is highlighted and emphatically displayed on a display, in an oblique direction, it is possible to prevent a problem of parallax errors, such that the graphic is seen as double.

As described above, according to the first embodiment, the set information of an object to be stereoscopically displayed, such as a road, a route, or an icon, includes information indicating a cross-section of a graphic, and the graphic is provided with a slope, thereby making it possible to emphatically display the graphic. The slope can reduce parallax errors, thereby providing accurate visibility.

(Second embodiment)

Fig. 11 A illustrates another example of the road drawing information stored in the navigation setting information DB 119 in table form.

The road drawing information is generated by the processor unit 111. The road drawing information includes information with regard to a line width on an actual road, the depth (indicated by 0 to 9 from the front to the rear position of the screen), the radius of a gradation circle, a size of a gradation filter. The road drawing information is provided for each type of roads, to which an ID is attached, such as an express way or a general road. The road drawing information is stored in the navigation setting information DB 119. A shape of a road is represented by a line width. The depth is represented by the numeric numbers 0 to 9, and in the following description the very front position is denoted by 0, the very rear position is denoted by 9, and any position (middle position) except the front and rear positions is denoted by 1 to 8.

Fig. 11B illustrates an example of the route drawing information stored in the navigation setting information DB 119 in table form. The route drawing information is drawing information with regard to a route, and includes one type of roads (ID = 0), which is different from the road drawing information.

The above-mentioned gradation filter is disclosed, for example, in the following internet URLs:

    http://www.mis.med.akita-u.ac.jp/~kata/image/sharpen.html, and
    http://www.myu.ac.jp/~makanae/CG/cg1_4.htm.

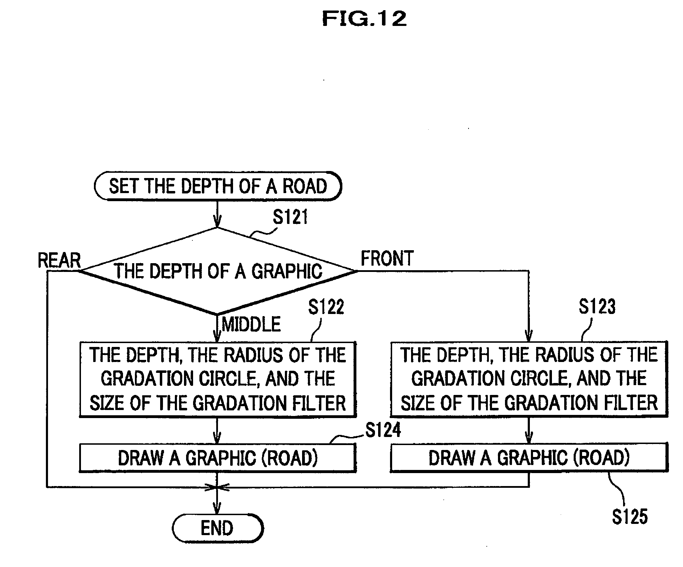

Fig. 12 is a flowchart for explaining an operation of the on-vehicle stereoscopic display device 10 according to the second embodiment of the present invention, and illustrates a flow of a process for setting the depth of a road. Fig. 12 also shows an operating procedure of a program according to the present invention. The flow of a process for setting the depth of a road is described with reference to Fig. 12.

Firstly, the on-vehicle information processing device 11 acquires the road drawing information shown in Fig. 11A when displaying an object to be stereoscopically displayed, such as a road, in any position except the front and the rear positions of the screen (step S121 "middle").

Specifically, the on-vehicle information processing device 11 acquires information indicating a cross-sectional shape of the road, which includes the depth 5, the radius of the gradation circle 4, and the size of the gradation filter 5, so that an inner portion of a graphic (line) of the road, which excludes the outline portion, is displayed as seen located in the middle position and the outline portion is displayed as seen located from the middle position to the rear position and extends from the inner portion of the graphic toward the outside (step S 122).

On the other hand, when displaying the road at the front of the screen (step S121 "front"), the on-vehicle information processing device 11 acquires information indicating a cross-sectional shape of the road, which includes the depth 0, the radius of the gradation circle 2, and the size of the gradation filter 3 so that the road including its outline is displayed at the front of the screen (step S123).

Specifically, the processor unit 111 in advance generates the road drawing information indicating the depth, the radius of the gradation circle, and the size of the gradation filter, as shown in Fig. 11A. Then, the processor unit 111 writes the road drawing information in the navigation setting information DB 119 in advance. The road drawing information shown in Fig. 11A may be generated by inputting a parameter in a predetermined function and be sequentially acquired in the same manner as in the first embodiment.

The graphics processor unit 112 draws a line according to the acquired cross-sectional shape in a position on a road in the actual screen VRAM 115 (steps S124, S125). The setting process in steps S122, S123 and the drawing process in steps S124, S125 are respectively performed as many times as the number of types of the road.

By these processes, a road can be provided with a slope, and the slope can reduce parallax errors. The depth setting process is performed with a route, a background, an icon, and a character in the same manner as mentioned above. The drawing information of the route is shown in Fig. 11B.

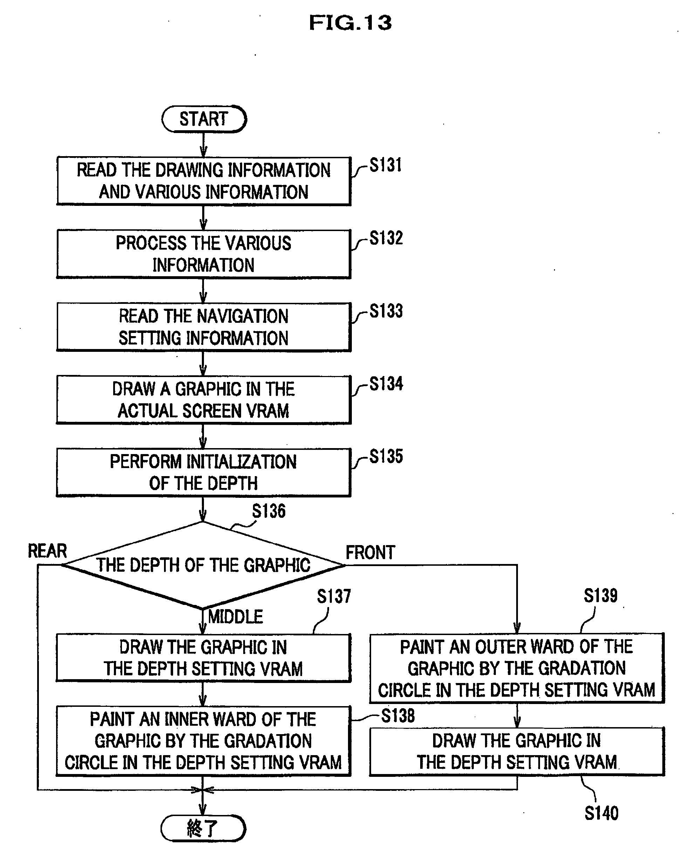

Fig. 13 is a flowchart for explaining an operation of the on-vehicle stereoscopic display device 10 according to the second embodiment of the present invention. Fig. 13 shows a flow of a process for drawing the depth of a graphic including a road (steps S124, S125 in Fig. 12). Fig. 13 also shows an operating procedure of a program according to the present invention.

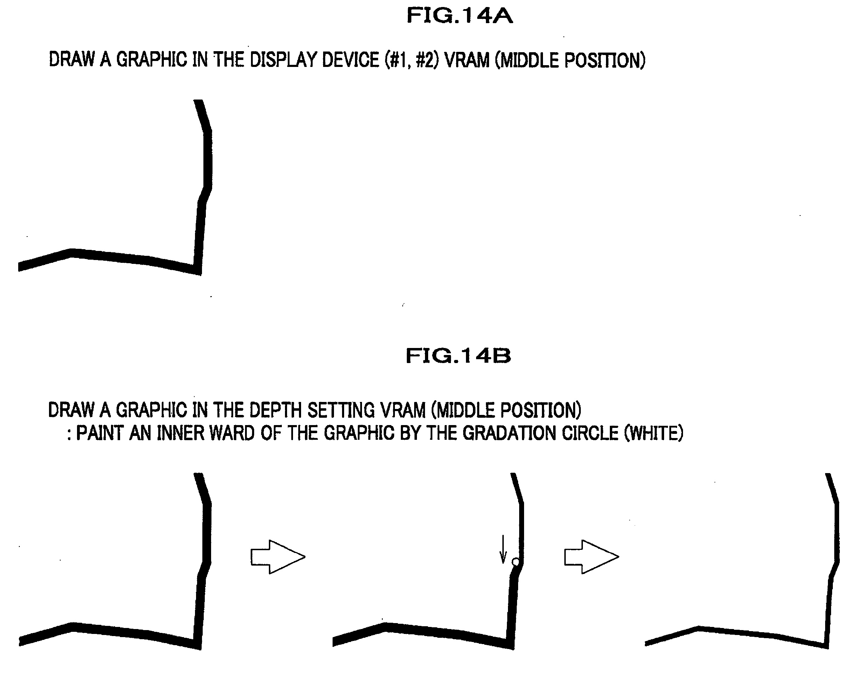

Figs. 14 to 20 are schematic views of operations of the on-vehicle stereoscopic display device according to the second embodiment, wherein the operations are illustrated on the display screen. Figs 14 to 20 are provided to support the operation illustrated by the flowchart in Fig. 13.

Hereinafter, an operation of the on-vehicle stereoscopic display device 10 according to the second embodiment will be described with reference to the flowchart in Fig. 13 and the schematic views in Figs. 14 to 20.

The processor unit 111 reads the drawing information with regard to a graphic including a road from the drawing graphic information DB 118. If necessary, the processor unit 111 reads a vehicle position from the position detection device 13, vehicle information such as a vehicle speed from the ECU 15, or map information or the like from the map information DB 117 (step S131). Then, the processor unit 111 processes the above various information in such a format that the information can be displayed on a map screen, a route guidance screen, a menu screen, or the like (step S132).

Further, the processor unit 111 reads the navigation setting information with regard to the drawing information, which is required for drawing a graphic including a road, from the navigation setting information DB 119 (step S 133), and draws the graphic in the actual screen VRAM 115 (step S134). The graphics processor unit 112 writes the graphic generated based on the above-mentioned various drawing information in the actual screen VRAM 115, thereby drawing the graphic on the actual screen.

Then, the graphics processor unit 112 performs initialization of the depth of the screen (step S135). Specifically, the graphics processor unit 112 sets the depths of all screens to the rear position 9, and writes the depths in the depth setting VRAM 116. The graphics processor unit 112 reads information (0 to 9) with regard to the depth of a graphic from the navigation setting information DB 119, and determines the depth of the graphic as a display specification of the screen (step S136).

For example, the information with regard to the depth of a road is set to be the very rear position 9, and then no operation is performed because the depth is set to be the very rear position at the initialization. When the depth of a road shows a middle position, the graphics processor unit 112 draws a graphic of the road in the depth setting VRAM 116 (step S137).

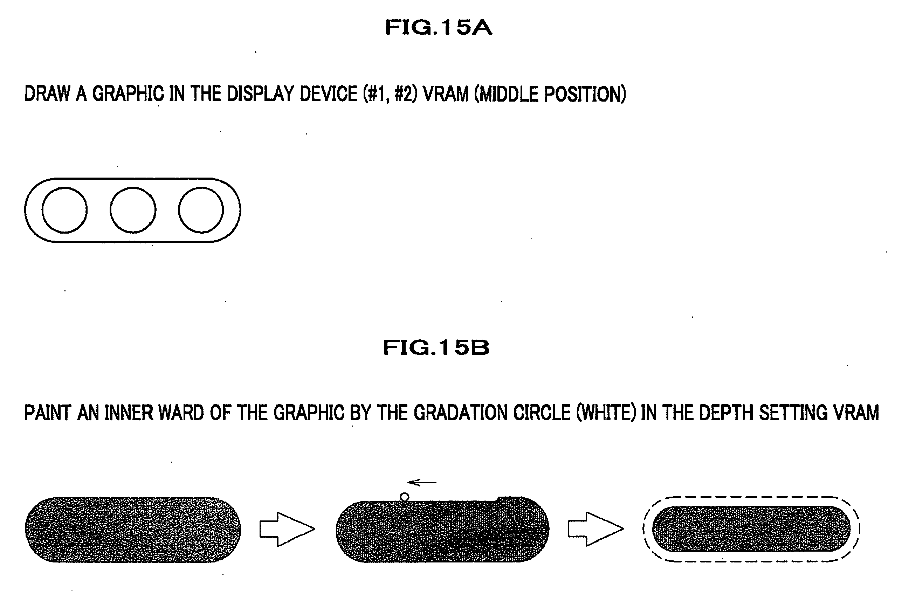

When a line to represent a road or a route is drawn as a graphic in the stereoscopic display 12 (the display device # 1 (121), the display device #2 (122)) as shown in Fig. 14A, a line is drawn in the depth setting VRAM 116 in tone representing the depth, as shown in Fig. 14B. When a traffic signal is drawn as a graphic as shown in Fig. 15A, a graphic is drawn in the depth setting VRAM 116 in tone representing the depth as shown in Fig. 15B.

Then, the graphics processor unit 112 performs a process to paint an outer side of the graphic by the gradation circle in the depth setting VRAM 116. By the process, the inner ward of the graphic is painted in white.

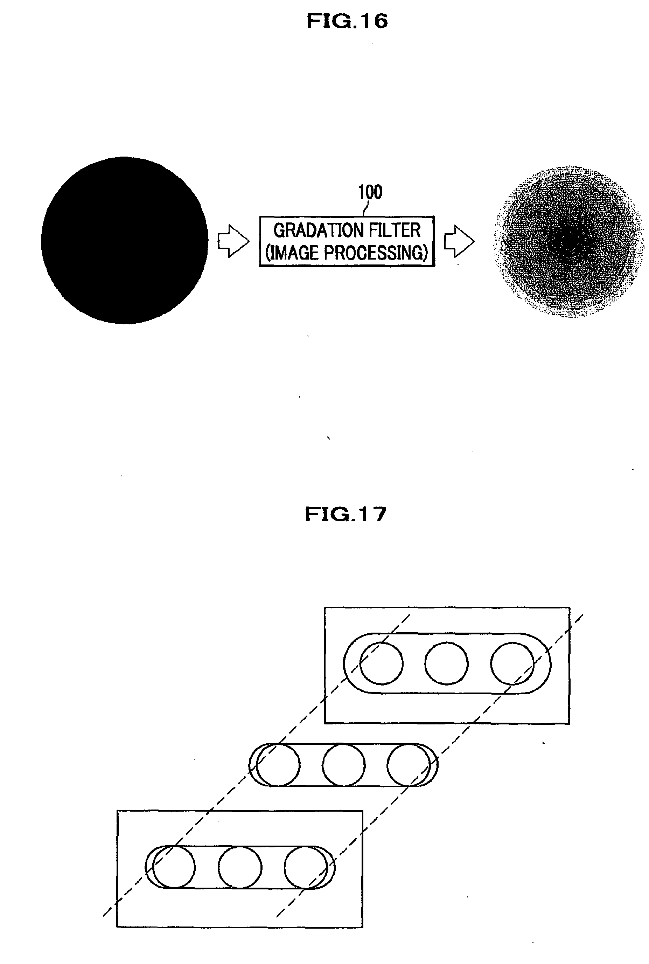

The gradation circle is formed as shown in Fig. 16. Specifically, the graphics processor unit 112 converts the brightness of a circle generated according to the radius of the gradation circle by the gradation filter generated according to the size of the gradation filter, thereby generating the gradation circle. The radius of the gradation circle and the size of the gradation filter are defined in the navigation setting information DB 119. The graphics processor unit 112 performs the brightness conversion to gradate the above generated circle by the gradation filter 100 generated according to the size of the gradation filter. The graphics processor unit 112 then erases the inner outline of the graphic in white, thereby painting the inner ward of the graphic (step S138 in Fig. 13).

In the depth setting VRAM 116, when the graphic is drawn in the display device #1 (#2) VRAM 113 (114) as shown in Fig. 14A, a circumference of the line is painted in white, and when the graphic is drawn in the display device #1 (#2) VRAM 113 (114) as shown in Fig. 15A, a circumference of the graphic is painted in white. Therefore, when the line is drawn, the line becomes thinner than the original line by the width of the gradation circle as show in Fig. 14, and when the graphic is drawn, the graphic becomes smaller in its area than the original graphic by the width of the gradation circle as shown in Fig. 17.

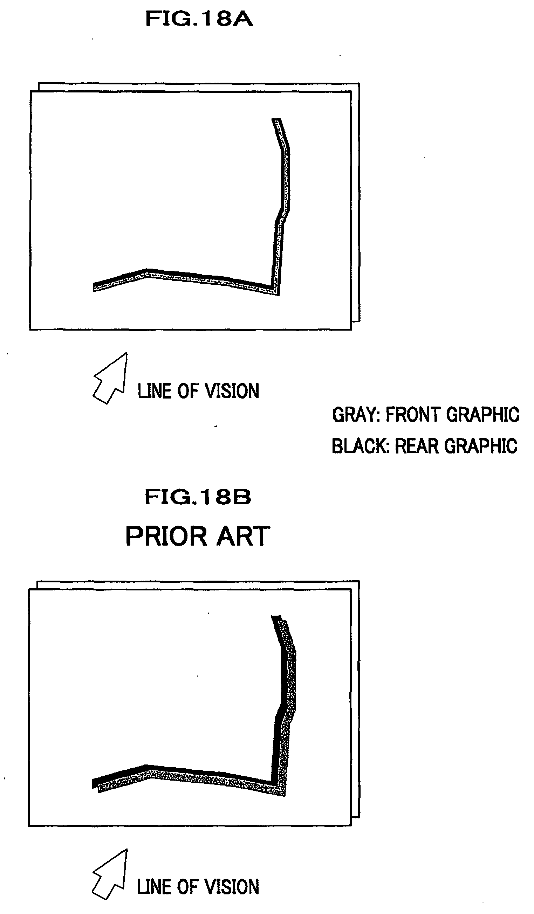

By the above process, as shown in Fig. 18A, it is possible to prevent a conventional phenomenon due to parallax errors, such that the graphic (road) is seen as double when a line of vision slides off the font position of the device, as shown in Fig. 18B. That is, by making small a graphic located at the front, it is possible to prevent the problem that the graphic (road) is seen as double even when a line of vision slides off.

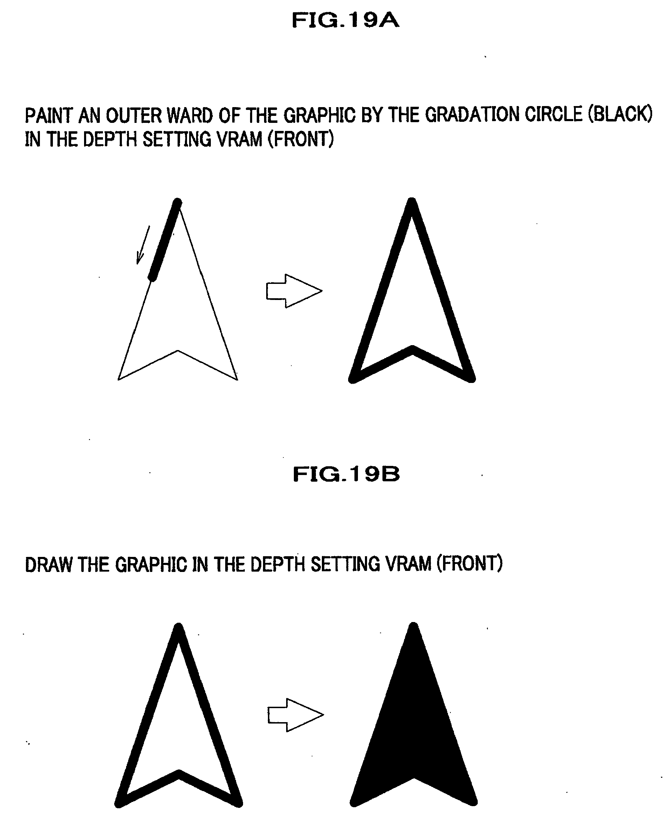

When the depth of a graphic indicates the very front position (the depth 0), the graphics processor unit 112 extracts the circumference of a graphic, and paints the outer ward of the graphic by using the gradation circle as shown in Fig. 19A in the depth setting VRAM 116 (step S139 in Fig. 13). Then, as shown in Fig. 19B, the graphics processor unit 112 draws the graphic in the depth setting VRAM 116 so as to overwrite the painted portion on the circumference of the graphic (step S140 in Fig. 13). Therefore, the graphic, which has a larger area than the original graphic by the circumference portion, is drawn in the depth setting VRAM 116.

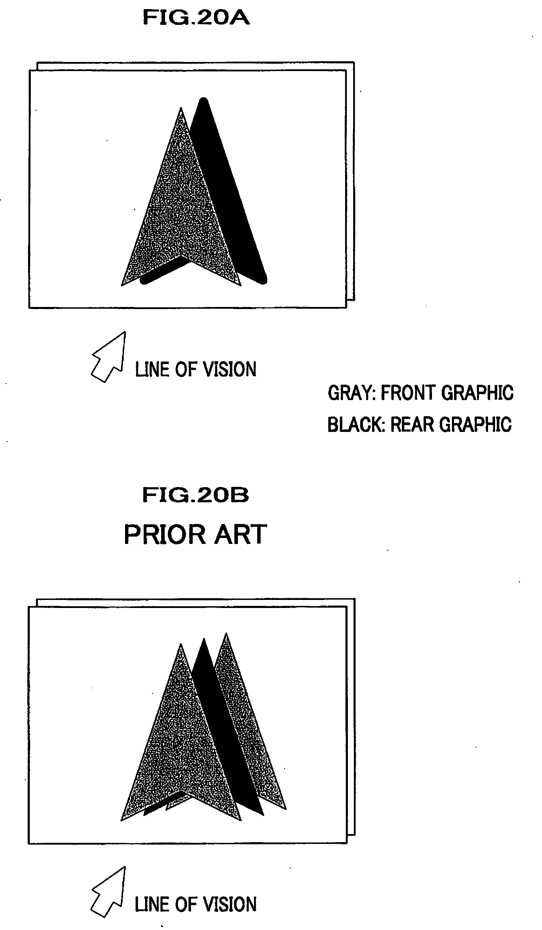

By the above process, as shown in Fig. 20A, it is possible to prevent a conventional phenomenon due to parallax errors, such that the graphic is seen as double when a line of vision slides off the font position of the device, as shown in Fig. 20B. That is, by making large the graphic located at the front to generate a shadow, it is possible to prevent the problem that the graphic (road) is seen as double even when a line of vision slides off.

As described above, according to the second embodiment, when the graphic is displayed as seen located in the approximately middle position between the front and the rear position of the screen, the inner portion of the graphic excluding its outline portion is displayed as seen located in the middle position, and the outline portion of the graphic is displayed as seen located from the middle position to the rear position and extends from the inner portion to the outside, so that the graphic at the front position is covered by the graphic at the rear position. Therefore, it is possible to prevent the problem that the graphic is seen as double when viewed from the position off the front of the screen.

When a graphic to be stereoscopically displayed is displayed at the very front of the screen, not only the graphic but also the outline of the graphic is displayed at the front of the screen, and a shadow portion becomes larger by the outline portion, and therefore the graphic at the rear position is entirely hidden. Thereby, it is possible to prevent the problem that the graphic is seen as double.

The inner area or the outline width of a cross-sectional shape of a graphic to be stereoscopically displayed is changed based on a vehicle speed signal obtained from a sensor (not shown) through the ECT 15. Thereby, it is possible to prevent the problem caused by parallax errors, such that the graphic is seen as double, even when a vehicle body shakes roughly due to an increasing vehicle speed and the line of vision is not stable.

According to the above-mentioned embodiment of the present invention, only the LCD is shown as an example of the stereoscopic display 12 (the display devices #1, #2), but the same effect can be obtained by using an electro luminescence (EL) or other display devices capable of providing a transparent display.

The on-vehicle stereoscopic display device 10 according to the embodiment of the present invention is performed by dedicated hardware as mentioned above. However, the on-vehicle stereoscopic display device 10 may be performed in such a manner that a program to perform a function of the device 10 is recorded in a computer-readable recording medium and the program recorded in the medium is read by a computer system.

The computer-readable recording medium includes a flexible disc, a hard disc, an optical disc, or the like, or the one that holds a program dynamically when transmitting a program via a communication medium such as the internet, or the one that holds a program in a certain period of time, such as a volatile memory of a server.

The above features and embodiments can be combined in any way partly or as a whole.

**Claims**

1. An on-vehicle stereoscopic display device, on which a graphic is displayed on at least two display devices with different brightness levels and the graphic displayed on the display device is superimposed to represent depth of the graphic,

the device comprising:

a processor unit (111) that generates information indicating a cross-sectional shape of the graphic to be stereoscopically displayed; and
a graphics processor unit (112) that performs a process to transparently display the graphic from a front position toward a rear position of a screen to represent the depth of the graphic, based on the generated information indicating the cross-sectional shape.

2. The on-vehicle stereoscopic display device according to claim 1,
wherein the graphic is at least one of a line to draw a road, a graphic to draw an icon, a character string to draw a name, and a graphic to draw a background.

3. The on-vehicle stereoscopic display device according to claim 1 or 2,
wherein the information indicating the cross-sectional shape includes the number of the superimposed graphics, a shape of each of the superimposed graphics, and the depth of the each graphic.

4. The on-vehicle stereoscopic display device according to at least one of claims 1 to 3,
wherein the information indicating the cross-sectional shape includes the depth of the graphic, a radius of a gradation circle, and a size of a gradation filter.

5. The on-vehicle stereoscopic display device according to at least one of claims 1 to 4,
wherein the processor unit (111) generates the information indicating the cross-sectional shape to sort the graphics in the order of priority, in which the graphics are superimposed, and to sequentially display the sorted graphics as seen located from the front position to the rear position of the screen.

6. The on-vehicle stereoscopic display device according to at least one of claims 1 to 5,
wherein the processor unit (111) generates the information indicating the cross-sectional shape to display an inner portion of the graphic excluding an outline of the graphic as seen located in a middle position between the front position and the rear position of the screen, and display the outline, which extends from the inner portion toward an outer ward of the graphic, as seen located from the middle position to the rear position, thereby displaying the graphic as seen located in the middle position.

7. The on-vehicle stereoscopic display device according to at least one of claims 1 to 6,
wherein the processor unit (111) generates the information indicating the cross-sectional shape to display the graphic including the outline as seen located in the front position of the screen, thereby displaying the graphic as seen located in the front position of the screen.

8. The on-vehicle stereoscopic display device according to at least one of claims 1 to 7,
wherein the processor unit (111) changes an inner area or an outline width of the cross-sectional shape of the graphic based on a vehicle speed signal obtained from a externally connected sensor.

9. The on-vehicle stereoscopic display device according to at least one of claims 1 to 8,
the device further comprising:

a screen storage unit for the display device that stores graphic information to be displayed in the display device;
a screen storage unit for an actual screen that stores the graphic, which is to be stereoscopically displayed; and
a screen storage unit for setting depth that stores depth setting information;

wherein the graphics processor unit (112) includes:

a screen writing unit for the display device that writes graphic information, which is to be displayed, in the screen storage unit for the display device;
a reading unit for the actual screen that reads the graphic, which is to be stereoscopically displayed, from the screen storage unit for the actual screen;
a screen reading unit for setting depth that reads the depth setting information from the screen storage unit for setting depth that stores the depth setting information corresponding to each pixel of graphic information, which is generated by the processor unit (111) and is stored in the screen storage unit for the actual screen; and
a graphic output conversion unit that copies the graphic information stored in the screen storage unit for the actual screen, converts a brightness of the graphic information based on the depth setting information read from the screen storage unit for setting depth, and outputs the copied graphic information according to the converted brightness into the screen writing units for the display device.

10. The on-vehicle stereoscopic display device according to at least one of claims 1 to 9, wherein the graphic output conversion unit repeatedly draws the graphic as many times as the number of the superimposed graphics according to information indicating a shape and depth determined by the processor unit (111), thereby converting the brightness.

11. The on-vehicle stereoscopic display device according to at least one of claims 1 to 10, wherein the graphic output conversion unit paints an inner ward of the graphic by using a circle generated by a gradation filter, and makes the graphic smaller by a portion of the painted inner ward, thereby displaying the graphic as seen located in the approximately middle position between the front position and the rear position of the screen.

12. The on-vehicle stereoscopic display device according to at least one of claims 1 to 11, wherein the graphic output conversion unit paints an outer ward of the graphic by using a circle generated by a gradation filter, and makes a shadow portion larger by a portion of the painted outer ward, thereby displaying the graphic as seen located in the front position of the screen.

13. A program used in an on-vehicle stereoscopic display device, on which a graphic is displayed on at least two display devices with different brightness levels and the graphic displayed on the display device is superimposed to represent depth of the graphic,
the program to be executed by a computer including:

a first process to generate information indicating a cross-sectional shape of the graphic to be stereoscopically displayed; and
a second process to transparently display the graphic from a front position toward a rear position of a screen to represent the depth of the graphic, based on the generated information indicating the cross-sectional shape of the graphic.

14. The program according to claim 13, wherein the first process includes the step of generating the information indicating the cross-sectional shape, the information including the number of the superimposed graphics, a shape of the each graphic of the superimposed graphics, and a depth of the each graphic, thereby displaying the graphic.

15. The program according to claim 13 or 14, wherein the first process includes:

a step of generating the information indicating the cross-sectional shape including the depth of the graphic, a radius of a gradation circle, and a size of a gradation filter to display an inner portion of the graphic excluding an outline of the graphic as seen located in a middle position between the front position and the rear position of the screen, and display the outline, which extends from the inner portion of the graphic toward an outer ward of the graphic, as seen located from the middle position to the rear position, thereby displaying the graphic as seen located in the middle position; and
a step of generating the information indicating the cross-sectional shape including the depth of the graphic, the radius of the gradation circle, and the size of the gradation filter to display the graphic including the outline as seen located in the front position of the screen, thereby displaying the graphic as seen located in the front position of the screen.

16. The program, according to at least one of claims 13 to 15, wherein the second process includes the step of repeatedly drawing depth setting information of the graphic in a screen storage unit for setting depth as many times as the number of the superimposed graphics stored in the drawing information storage unit according to information indicating a shape and depth of the graphic, the information stored in the drawing information storage unit.

17. The program according to at least one of claims 13 to 16, wherein the second process includes:

the step of painting an inner ward of the graphic by using a circle generated by a gradation filter, making the graphic smaller by a portion of the painted inner ward, and displaying the graphic as seen located in the approximately middle position in the screen storage unit for setting depth, thereby displaying the graphic as seen located in the middle position between the front position and the rear position of the screen; and

the step of painting an outer ward of the graphic by using a circle generated by a gradation filter, making a shadow portion larger by a portion of the painted outer ward, and displaying the graphic as seen located in the front position in the screen storage unit for setting depth, thereby displaying the graphic as seen located in the front position of the screen.

# FIG.1

10 ON-VEHICLE STEREOSCOPIC DISPLAY DEVICE

| 13 | 14 | 15 | 16 |
|---|---|---|---|
| POSITION DETECTION DEVICE | OPERATION INPUT DEVICE | ECU | AUDIO OUTPUT DEVICE |

12 STEREOSCOPIC DISPLAY

DISPLAY DEVICE #2

122

DISPLAY DEVICE #1

121

11

120 I/F UNIT

DISPLAY DEVICE #1 VRAM ~113

DISPLAY DEVICE #2 VRAM ~114

ACTUAL SCREEN VRAM ~115

DEPTH SETTING VRAM ~116

MAP INFORMATION DB ~117

DRAWING GRAPHIC INFORMATION DB ~118

NAVIGATION SETTING INFORMATION DB ~119

111 PROCESSOR UNIT

GRAPHICS PROCESSOR UNIT

112

ON-VEHICLE INFORMATION PROCESSING DEVICE

EP 1 839 950 A2

# FIG.2

119

NAVIGATION SETTING INFORMATION DB

| BACKGROUND DRAWING INFORMATION |
| ROAD DRAWING INFORMATION |
| ICON DRAWING INFORMATION |
| ROUTE DRAWING INFORMATION |
| CHARACTER DRAWING INFORMATION |

# FIG.3

WHITE : REAR

BLACK : FRONT

112 GRAPHICS PROCESSOR UNIT

114
DISPLAY DEVICE #2
VRAM

135
DISPLAY DEVICE #2
VRAM WRITING UNIT

131
GRAPHIC OUTPUT CONVERSION UNIT

132
ACTUAL SCREEN
VRAM READING UNIT

115
ACTUAL SCREEN
VRAM

113
DISPLAY DEVICE #1
VRAM

134
DISPLAY DEVICE #1
VRAM WRITING UNIT

133
DEPTH SETTING
VRAM READING UNIT

116
DEPTH SETTING
VRAM

EP 1 839 950 A2

# FIG.4

```
                    ( START )
                        ↓
  CALCULATE A DISTANCE TO ARRIVE AT A GUIDED POINT    ⌐ S41
                        ↓
  SET THE DEPTH OF ALL SCREENS (INITIALIZATION)       ⌐ S42
                        ↓
  DRAW A BACKGROUND ON THE ACTUAL SCREEN              ⌐ S43
                        ↓
  SET THE DEPTH OF THE BACKGROUND                     ⌐ S44
                        ↓
  DRAW A ROAD ON THE ACTUAL SCREEN                    ⌐ S45
                        ↓
  SET THE DEPTH OF THE ROAD                           ⌐ S46
                        ↓
  DRAW AN ICON ON THE ACTUAL SCREEN                   ⌐ S47
                        ↓
  SET THE DEPTH OF THE ICON                           ⌐ S48
                        ↓
  DRAW A ROUTE ON THE ACTUAL SCREEN                   ⌐ S49
                        ↓
  SET THE DEPTH OF THE ROUTE                          ⌐ S50
                        ↓
  DRAW A PLACE-NAME ON THE ACTUAL SCREEN              ⌐ S51
                        ↓
  SET THE DEPTH OF THE PLACE-NAME                     ⌐ S52
                        ↓
                    ( END )
```

# FIG.5A

ROAD DRAWING INFORMATION

| TYPES OF ROADS | LINE WIDTH ON THE ACTUAL SCREEN | THE NUMBER OF SUPERIMPOSED LINES FOR SETTING THE DEPTH | WIDTH OF LINE 1 | DEPTH OF LINE 1 | WIDTH OF LINE 2 | DEPTH OF LINE 2 | WIDTH OF LINE 3 | DEPTH OF LINE 3 | WIDTH OF LINE 4 | DEPTH OF LINE 4 | LINE # i ... |
|---|---|---|---|---|---|---|---|---|---|---|---|
| EXPRESS WAY (ID=1) | 6 | 3 | 6 | 3 | 4 | 2 | 2 | 1 | – | – | ... |
| GENERAL ROAD (ID=2) | 4 | 2 | 4 | 3 | 2 | 2 | – | – | – | – | ... |
| NARROW STREET (ID=3) | 2 | 1 | 2 | 3 | – | – | – | – | – | – | ... |
| ⋮ | ⋮ | ⋮ | ⋮ | ⋮ | ⋮ | ⋮ | ⋮ | ⋮ | ⋮ | ⋮ | ⋮ |

# FIG.5B

ROUTE DRAWING INFORMATION

| TYPES OF ROADS | LINE WIDTH ON THE ACTUAL SCREEN | THE NUMBER OF SUPERIMPOSED LINES FOR SETTING THE DEPTH | WIDTH OF LINE 1 | DEPTH OF LINE 1 | WIDTH OF LINE 2 | DEPTH OF LINE 2 | WIDTH OF LINE 3 | DEPTH OF LINE 3 | WIDTH OF LINE 4 | DEPTH OF LINE 4 | LINE # i ... |
|---|---|---|---|---|---|---|---|---|---|---|---|
| ROUTE (ID=0) | 8 | 4 | 16 | 3 | 14 | 2 | 12 | 1 | 10 | 0 | ... |

EP 1 839 950 A2

# FIG.6

```
            ( START )
                │
                ▼
┌─────────────────────────────────────────┐  ┌─ S61
│ READ A ROAD DATA FROM THE MAP INFORMATION DB │
└─────────────────────────────────────────┘
                │
                ▼
┌─────────────────────────────────────────┐  ┌─ S62
│ READ THE ROAD DRAWING INFORMATION FROM  │
│ THE NAVIGATION SETTING INFORMATION DB   │
└─────────────────────────────────────────┘
                │
                ▼
┌─────────────────────────────────────────┐  ┌─ S63
│ SORT THE ROAD DRAWING INFORMATION IN    │
│ ASCENDING ORDER OF THE ROAD WIDTH       │
└─────────────────────────────────────────┘
                │
                ▼
       THE NUMBER OF TYPES OF ROADS          ┌─ S64
                │
                ▼
      THE NUMBER OF SUPERIMPOSED LINES       ┌─ S65
                │
                ▼
┌─────────────────────────────────────────┐  ┌─ S66
│ SET THE DEPTH AND WIDTH OF LINE # i     │
└─────────────────────────────────────────┘
                │
                ▼
┌─────────────────────────────────────────┐  ┌─ S67
│ DRAW LINE # i IN A POSITION ON A ROAD   │
└─────────────────────────────────────────┘
                │
                ▼                              ┌─ S68
                │
                ▼                              ┌─ S69
                │
                ▼
             ( END )
```

# FIG.7

```
  SORT THE ROAD DRAWING          S63
  INFORMATION IN ASCENDING
  ORDER OF THE ROAD WIDTH

         ↓

  THE NUMBER OF TYPES OF ROADS    S631

         ↓

  CALCULATE A MAXIMUM VALUE OF     S632
  A LINE WIDTH OF THE ROAD

         ↓                         S633


         ↓

  SORT THE TYPES OF ROADS IN ASCENDING ORDER OF    S634
  THE MAXIMUM VALUE OF THE LINE WIDTH

         ↓

       END
```

# FIG.8

NARROW STREET

EXPRESS
WAY

ROUTE

GENERAL
ROAD

EP 1 839 950 A2

**FIG.9A**

LINE 1 (WIDTH 6, DEPTH 3)
LINE 2 (WIDTH 4, DEPTH 2)
LINE 3 (WIDTH 2, DEPTH 1)

DEPTH — EXPRESS WAY

LINE WIDTH 6 ON THE ACTUAL SCREEN (ROAD)

**FIG.9B**

LINE 1 (WIDTH 4, DEPTH 3)
LINE 2 (WIDTH 2, DEPTH 2)

DEPTH — GENERAL ROAD

LINE WIDTH 4 ON THE ACTUAL SCREEN (ROAD)

**FIG.9C**

LINE 1 (WIDTH 2, DEPTH 3)

DEPTH — NARROW STREET

LINE WIDTH 2 ON THE ACTUAL SCREEN (ROAD)

21

**FIG.10A**

LINE WIDTH 8 ON THE ACTUAL SCREEN (ROAD)

**FIG.10B**

LINE WIDTH 8 ON THE ACTUAL SCREEN (ROAD)

**FIG.10C**

LINE WIDTH 8 ON THE ACTUAL SCREEN (ROAD)

**FIG.10D**

LINE WIDTH 8 ON THE ACTUAL SCREEN (ROAD)

**FIG.10E**

LINE WIDTH 8 ON THE ACTUAL SCREEN (ROAD)

## FIG.11A

ROAD DRAWING INFORMATION

| TYPES OF ROADS | LINE WIDTH ON THE ACTUAL SCREEN | DEPTH (0: FRONT- 9: REAR) | RADIUS OF A GRADATION CIRCLE | SIZE OF A GRADATION FILTER |
|---|---|---|---|---|
| EXPRESS WAY (ID=1) | 16 | 2 | 2 | 3 |
| GENERAL ROAD (ID=2) | 14 | 5 | 4 | 5 |
| NARROW STREET (ID=3) | 12 | 8 | 2 | 3 |
| ⋮ | ⋮ | ⋮ | ⋮ | ⋮ |

## FIG.11B

ROUTE DRAWING INFORMATION

| TYPES OF ROADS | LINE WIDTH ON THE ACTUAL SCREEN | DEPTH (0: FRONT- 9: REAR) | RADIUS OF A GRADATION CIRCLE | SIZE OF A GRADATION FILTER |
|---|---|---|---|---|
| ROUTE (ID=0) | 18 | 0 | 6 | 1 |

EP 1 839 950 A2

# FIG.12

SET THE DEPTH OF A ROAD

S121

REAR — THE DEPTH OF A GRAPHIC — FRONT

S122

MIDDLE

S123

| THE DEPTH, THE RADIUS OF THE GRADATION CIRCLE, AND THE SIZE OF THE GRADATION FILTER | THE DEPTH, THE RADIUS OF THE GRADATION CIRCLE, AND THE SIZE OF THE GRADATION FILTER |

S124

DRAW A GRAPHIC (ROAD)

DRAW A GRAPHIC (ROAD)

END

S125

# FIG.13

```
                    ( START )
                        │
                        ▼
        ┌───────────────────────────────┐
        │ READ THE DRAWING INFORMATION  │──S131
        │    AND VARIOUS INFORMATION    │
        └───────────────────────────────┘
                        │
                        ▼
        ┌───────────────────────────────┐
        │     PROCESS THE VARIOUS       │──S132
        │        INFORMATION            │
        └───────────────────────────────┘
                        │
                        ▼
        ┌───────────────────────────────┐
        │      READ THE NAVIGATION      │──S133
        │     SETTING INFORMATION       │
        └───────────────────────────────┘
                        │
                        ▼
        ┌───────────────────────────────┐
        │    DRAW A GRAPHIC IN THE      │──S134
        │     ACTUAL SCREEN VRAM        │
        └───────────────────────────────┘
                        │
                        ▼
        ┌───────────────────────────────┐
        │    PERFORM INITIALIZATION     │──S135
        │        OF THE DEPTH           │
        └───────────────────────────────┘
                        │     S136
                        ▼
REAR ◄──────◆ THE DEPTH OF THE GRAPHIC ◆──────► FRONT
       │         │MIDDLE          S137                      S139
       │         ▼                                           ▼
       │  ┌─────────────────────┐      ┌────────────────────────────────┐
       │  │  DRAW THE GRAPHIC IN │      │  PAINT AN OUTER WARD OF THE     │
       │  │ THE DEPTH SETTING VRAM│      │  GRAPHIC BY THE GRADATION      │
       │  └─────────────────────┘      │ CIRCLE IN THE DEPTH SETTING VRAM│
       │         │                      └────────────────────────────────┘
       │         ▼          S138                        │
       │  ┌─────────────────────┐                       ▼
       │  │ PAINT AN INNER WARD OF THE│   ┌────────────────────────────┐
       │  │ GRAPHIC BY THE GRADATION  │   │    DRAW THE GRAPHIC IN      │
       │  │ CIRCLE IN THE DEPTH SETTING VRAM│ THE DEPTH SETTING VRAM    │
       │  └─────────────────────┘        └────────────────────────────┘
       │         │                                      │
       │         │                                     S140
       └─────────┼──────────────────────────────────────┘
                 ▼
             ( 終了 )
```

# FIG.14A

DRAW A GRAPHIC IN THE DISPLAY DEVICE (#1, #2) VRAM (MIDDLE POSITION)

# FIG.14B

DRAW A GRAPHIC IN THE DEPTH SETTING VRAM (MIDDLE POSITION)
: PAINT AN INNER WARD OF THE GRAPHIC BY THE GRADATION CIRCLE (WHITE)

EP 1 839 950 A2

# FIG.15A

DRAW A GRAPHIC IN THE DISPLAY DEVICE (#1, #2) VRAM (MIDDLE POSITION)

# FIG.15B

PAINT AN INNER WARD OF THE GRAPHIC BY THE GRADATION CIRCLE (WHITE) IN THE DEPTH SETTING VRAM

# FIG.16

# FIG.17

## FIG.18A

LINE OF VISION

GRAY: FRONT GRAPHIC
BLACK: REAR GRAPHIC

## FIG.18B

# PRIOR ART

LINE OF VISION

# FIG.19A

PAINT AN OUTER WARD OF THE GRAPHIC BY THE GRADATION CIRCLE (BLACK)
IN THE DEPTH SETTING VRAM (FRONT)

# FIG.19B

DRAW THE GRAPHIC IN THE DEPTH SETTING VRAM (FRONT)

## FIG.20A

LINE OF VISION

GRAY: FRONT GRAPHIC
BLACK: REAR GRAPHIC

## FIG.20B

## PRIOR ART

LINE OF VISION

**EP 1 839 950 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006087332 A
- JP 2004359051 A
- JP 2005189426 A